# NEUE EUROPÄISCHE PATENTSCHRIFT

(11) **EP 3 093 518 B2**
(45) Veröffentlichungstag und Bekanntmachung des Hinweises auf die Entscheidung über den Einspruch: **12.01.2022**
(45) Hinweis auf die Patenterteilung: 29.08.2018
(21) Anmeldenummer: 15001411.6
(22) Anmeldetag: 11.05.2015
(51) Int. Cl.: F16D 65/60

(54) **NACHSTELLEINHEIT FÜR EINEN AUTOMATISCHEN GESTÄNGESTELLER**
READJUSTMENT UNIT FOR AN AUTOMATIC ROD POSITIONER
UNITÉ DE RÉGLAGE POUR UN RÉGLEUR AUTOMATIQUE DE TIMONERIE

(43) Veröffentlichungstag der Anmeldung: 16.11.2016
(73) Patentinhaber: ZF CV Systems Europe BV, 1170 Brussels (BE)
(72) Erfinder: Keller, Marcus, 69469 Weinheim (DE); Stafflinger, Markus, 64625 Bensheim (DE)

(56) Entgegenhaltungen:
- EP-A2- 0 460 372
- EP-B1- 1 917 451
- GB-A- 1 085 048

## Beschreibung

Die vorliegende Erfindung betrifft eine Nachstelleinheit für einen automatischen Gestängesteller einer Bremse, insbesondere einer Nutzfahrzeugtrommelbremse, wobei die Nachstelleinheit aufweist: ein Gehäuse, eine Schneckenwelle, die in dem Gehäuse zwischen zwei Endpositionen um einen Axialhub verschiebbar gelagert ist, ein auf der Schneckenwelle angeordnetes Steuerritzel, eine auf der Schneckenwelle angeordnete Schnecke, und einen Freilauf, der zur Kraftübertragung zwischen dem Steuerritzel und der Schnecke in einer ersten Drehrichtung sowie zum Schlupf zwischen dem Steuerritzel und der Schnecke in einer entgegengesetzten zweiten Drehrichtung eingerichtet ist.

Automatische Gestängesteller mit Nachstellmechanismen sind beispielsweise bekannt aus EP 01917451 B1, EP 02307757 A1, EP 02352931 B1, EP 0598290 A1, EP 0598290 B1, US 7,757,824 B2, US 8,215,460 B2, US 8,245,820 B2, WO 02003/083322 A1.

Automatische Gestängesteller sind im Zusammenhang mit Trommelbremsen branchenweit bekannt als sogenannte "Automatic Slack Adjuster" und werden dazu benutzt, das Lüftspiel zwischen Bremsbelag und Bremstrommel zu regulieren. Automatische Nachstelleinheiten für Gestängesteller haben hierbei die Funktion, zu verhindern, dass das Lüftspiel zwischen Bremsbelag und Trommelbremse zu klein oder zu groß wird. Bei einem zu kleinen Spalt zwischen Bremsbelag und Bremstrommel tritt erhöhter Bremsbelagsverschleiß auf, es kann in Extremsituationen ferner zu sogenannten "Heißläufern" kommen. Ein zu großer Luftspalt zwischen Bremsbelag und Bremstrommel bewirkt im Gegenzug, dass die Bremskraft nicht in ausreichendem Maße auf die Bremsanlage übertragen wird. Somit hat die Variation des Lüftspiels unmittelbare Auswirkungen auf die Bremsleistung der Trommelbremse. Da an Nutzfahrzeugen üblicherweise mehrere Trommelbremsen zum Einsatz kommen, beispielsweise an jedem Rad eine Trommelbremse angeordnet wird, ist es für einen sicheren Betrieb des Fahrzeugs essenziell, dass das Lüftspiel über die verschiedenen Trommelbremsen hinweg möglichst wenig variiert. Würde beispielsweise ein Lüftspiel auf der rechten Seite einer Achse an der dort vorgesehenen Bremse deutlich kleiner sein als auf der gegenüberliegenden linken Seite, wäre die Bremswirkung unterschiedlich und das Fahrzeug würde beim Bremsen nach rechts ziehen. Das Lüftspiel hat somit neben der Bremswirkung selbst auch Einfluss auf die Fahrzeugabstimmung.

Es hat sich im Stand der Technik als nachteilig erwiesen, dass das Lüftspiel bei bekannten Funktionsprinzipien, wie beispielsweise gemäß den eingangs bezeichneten Publikationen, trotz komplexer und ausgeklügelter Nachstellmechanismen noch schwankt, teils sogar um bis zu 50 %. Im Stand der Technik ist man diesem Problem bisher damit begegnet, dass man die Einzelbestandteile der Nachstelleinheiten für die automatischen Gestängesteller mit sehr engen Toleranzen gefertigt hat, was einen hohen zeitlichen und finanziellen Aufwand nach sich zieht. Weiterhin wird im Stand der Technik als nachteilig empfunden, dass die Montage der teils hochkomplizierten Einheiten aufwendig ist.

Der Erfindung lag vor diesem Hintergrund die Aufgabe zugrunde, eine Nachstelleinheit für einen automatischen Gestängesteller anzugeben, die die vorgefundenen Nachteile möglichst weitgehend abmildert. Insbesondere lag der Erfindung die Aufgabe zugrunde, eine Nachstelleinheit der eingangs bezeichneten Art dahingehend zu verbessern, dass das Lüftspiel des Gestängestellers weniger stark schwankt. Ferner lag der Erfindung insbesondere zusätzlich die Aufgabe zugrunde, die eingangs bezeichnete Nachstelleinheit dahingehend zu verbessern, dass die Montage vereinfacht wird.

Die Erfindung löst die ihr zugrunde liegende Aufgabe bei einer Nachstelleinheit der eingangs bezeichneten Art mit den Merkmalen von Anspruch 1. Die Nachstelleinheit zeichnet sich dadurch aus, dass die Schneckenwelle eine erste und eine zweite Anschlagfläche aufweist, welche jeweils mit einem korrespondierenden Anschlag an den Endpositionen des Gehäuses in Kontakt bringbar sind. Bei der Nachstelleinheit gemäß der vorliegenden Erfindung definiert insbesondere der Axialhub das Lüftspiel des Gestängestellers. Die Erfindung folgt somit dem Ansatz, dass der Axialhub der Nachstelleinheit so wenig wie möglich schwanken sollte. Dies greift die Erfindung auf, indem die beiden Endpositionen durch die erste und zweite Anschlagfläche auf der Schneckenwelle selbst wellenseitig definiert werden. Auf diese Art und Weise muss neben den korrespondierenden Anschlagpositionen im Gehäuse, die ohnehin vorhanden sein müssen, nur noch ein weiteres Bauteil mit engen Toleranzen ausgelegt werden, nämlich die Schneckenwelle selbst. Durch die erfindungsgemäße Gestaltung wird somit das im Stand der Technik als nachteilig nachgewiesene Bilden einer Toleranzkette vermieden. Hierdurch werden zugleich zwei vorteilhafte Effekte erzielt. Zum einen wird es möglich, engere Toleranzen einzuhalten als zuvor, und zum anderen geschieht dies gleichzeitig bei vermindertem Herstellungsaufwand, da lediglich der Abstand der beiden Anschlagflächen zueinander toleriert werden muss.

Das Steuerritzel ist vorzugsweise zum Eingreifen in eine, insbesondere drehfest mit einem Kontrollarm verbundene, Kontrollscheibe des automatischen Gestängestellers eingerichtet. Der Kontrollarm ist vorzugsweise Teil des Gestängestellers. Die Schnecke ist vorzugsweise zum Engreifen in ein Schneckenrad einer Antriebswelle eingerichtet, wobei das Schneckenrad von der Schnecke in Rotation versetzt wird, wenn sich die Schneckenwelle in eine der beiden Endpositionen im Gehäuse befindet. Das Schneckenrad ist vorzugsweise mittels einer Kupplung mit der Antriebswelle wirkverbunden, wobei die Antriebswelle in Wirkverbindung mit einem Bewegungsmechanismus der Bremsbeläge steht. Ein solcher Bewegungsmechanismus ist beispielsweise unter dem Begriff "S-Nocken" bekannt.

Der Freilauf ist vorzugsweise wirkend zwischen dem Steuerritzel und der Schneckenwelle, oder zwischen dem Steuerritzel und der Schnecke direkt, oder zwischen der Schneckenwelle und der Schnecke angeordnet.

Das Schneckenrad, in welches die Schnecke der Nachstelleinheit eingreift, ist vorzugsweise mittels einer Kupplung mit einer Antriebswelle gekoppelt, die ihrerseits dazu eingerichtet ist, den Bewegungsmechanismus zum Verstellen der Bremsbeläge anzutreiben.

Gemäß der Erfindung ist die Schnecke drehfest auf der Schneckenwelle angeordnet, indem sie einstückig mit der Schneckenwelle ausgebildet ist und indem das Steuerritzel mittels des Freilaufs mit der Schneckenwelle gekoppelt ist. Dadurch, dass die Schnecke drehfest auf der Schneckenwelle angeordnet und einstückig mit der Schneckenwelle ausgebildet ist, wird die Montierbarkeit der Nachstelleinheit insgesamt verbessert. Es wird montagetechnisch hierdurch ermöglicht, dass das Steuerritzel auf das Bauteil bestehend aus Schnecke und Welle aufgesteckt werden kann. Gleichzeitig definieren nach wie vor die Anschlagflächen der Schneckenwelle die Maßhaltigkeit mit Blick auf das Lüftspiel, so dass es nicht auf die Axialmaße des Steuerritzels ankommt, und letzteres deutlich günstiger gefertigt werden kann.

Die Nachstelleinheit wird bevorzugt weitergebildet, indem sie eine Axialfeder aufweist, welche wirkend mit dem Gehäuse und der Schneckenwelle verbunden und dazu eingerichtet ist, die Schneckenwelle in Richtung des zweiten Anschlags vorzuspannen. Mittels der Vorspannung in Richtung des zweiten Anschlags wird das konstruktiv bedingte Lüftspiel aufrechterhalten und eine Normalstellung der Schneckenwelle definiert.

In einer weiteren bevorzugten Ausführungsform der Erfindung ist die erste Anschlagfläche als Wellenende der Schneckenwelle ausgebildet. Weiter vorzugsweise ist die zweite Anschlagfläche als Wellenabsatz ausgebildet.

Besonders bevorzugt weist die Schneckenwelle benachbart zu der zweiten Anschlagfläche einen in dem Gehäuse losgelagerten Gleitlagerabschnitt auf. Letztere Maßnahme ist insbesondere dann vorteilhaft, wenn die Schnecke einteilig mit der Schneckenwelle verbunden ausgebildet ist. Es kann gemäß dieser Ausführungsform auf eine separate Lagerhülse verzichtet werden, wie sie der Stand der Technik bisweilen aufwies. Neben der gleichbleibend hohen Maßhaltigkeit werden hierdurch der Herstellungsaufwand und die Montierfähigkeit weiter optimiert. Der Gleitlagerabschnitt ist in einer bevorzugten Ausführungsform aus einem gehärteten metallischen Werkstoff ausgebildet.

In einer besonders bevorzugten Ausführungsform sind die Schnecke und das Steuerritzel in axialer Richtung zwischen der ersten und zweiten Anschlagfläche angeordnet.

Bei der erfindungsgemäßen Nachstelleinheit ist der Freilauf vorzugsweise ausgebildet als: Schlingfeder, Rollenfreilauf, Schrägverzahnung mit Vorspannung, Sperrklinke oder Kombinationen aus dem Vorigen.

Die Axialfeder ist bei der Nachstelleinheit gemäß der Erfindung vorzugsweise ausgebildet als: Schraubenfeder, Tellerfeder, Wellenfeder, oder als Kombination aus dem Vorigen.

In einer weiteren bevorzugten Ausgestaltung ist das Steuerritzel auf die Schneckenwelle aufgesteckt, und weist eine Ausnehmung zur Aufnahme der Axialfeder auf, vorzugsweise auf einer der ersten Anschlagfläche zugewandten Seite. Dadurch, dass die Axialfeder auf der dem ersten Anschlag zugewandten Seite in das Steuerritzel eintaucht, drückt die Axialfeder das Steüerritzel auf die Schneckenwelle, ohne aber zugleich auch einen Einfluss des Steuerritzels auf die Maßhaltigkeit in Kauf nehmen zu müssen. Diese wird nach wie vor durch die ersten und zweiten Anschlagflächen auf der Schneckenwelle selbst definiert. Die Axialfeder drückt die erste Anschlagfläche im Normalzustand vorzugsweise von ihrer dortigen Endposition fort und wirkt dahingehend, dass stattdessen die zweite Anschlagfläche an der korrespondierenden gegenüberliegenden Endposition mit dem Gehäuse in Kontakt steht. Somit kann auch durch diese vorteilhafte Anordnung der Axialfeder auf eine Vielzahl weiterer Befestigungs- und Führungsmittel wie etwa Verschraubungen, Führungen oder dergleichen verzichtet werden. Die Gesamtzahl der benötigten Komponenten ist deutlich geringer als bisweilen aus dem Stand der Technik bekannt, was die Montage weiter vereinfacht.

Die Erfindung betrifft in einem weiteren Aspekt einen automatischen Gestängesteller für eine Trommelbremse, insbesondere eine Nutzfahrzeugtrommelbremse. Erfindungsgemäß wird vorgeschlagen, dass der automatische Gestängesteller eine Nachstelleinheit nach einer der hierin beschriebenen bevorzugten Ausführungsformen aufweist. Hinsichtlich der Vorteile und technischen Wirkungen des automatischen Gestängestellers wird insoweit auf die obigen Ausführungen verwiesen. Der automatische Gestängesteller besitzt die gleichen bevorzugten Ausführungsformen wie die erfindungsgemäße Nachstelleinheit.

In einem weiteren Aspekt betrifft die Erfindung ein Fahrzeug, insbesondere ein Nutzfahrzeug, mit einer Anzahl von Rädern, wobei eines, mehrere oder sämtliche der Räder mittels einer Trommelbremse gebremst sind, wobei einer, mehrere oder sämtliche der Trommelbremsen jeweils ein automatischer Gestängesteller mit einer Nachstelleinheit zugeordnet ist. Erfindungsgemäß wird vorgeschlagen, dass es sich hierbei um eine Nachstelleinheit nach einer der hierin beschriebenen bevorzugten Ausführungsformen, beziehungsweise um einen automatischen Gestängesteller nach einer der hierin beschriebenen bevorzugten Ausführungsformen handelt.

Die Erfindung wird nachfolgend unter Bezugnahme auf die beigefügten Figuren anhand eines bevorzugten Ausführungsbeispiels näher beschrieben. Die Figuren sollen das Ausführungsbeispiel nicht notwendigerweise maßstäblich darstellen. Vielmehr ist die Figur, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele und anhand der Figuren. Der Einfachheit halber sind nachfolgend für identische oder ähnliche Teile oder Teile mit identischer oder ähnlicher Funktion gleiche Bezugszeichen verwendet.

Die Figuren zeigen im Einzelnen:
Fig. 1 a,b schematische Darstellung eines Kerns der Nachstelleinheit gemäß einem bevorzugten Ausführungsbeispiel,
Fig. 2 die Nachstelleinheit gemäß Figuren 1a,b in einer Schnittansicht in Einbaulage,
Fig. 3 eine schematische Darstellung eines automatischen Gestängestellers mit ausgeblendetem Gehäuse, und
Fig. 4 eine schematische Darstellung eines Nutzfahrzeugs mit einer Trommelbremse und einem automatischen Gestängesteller gemäß dem bevorzugten Ausführungsbeispiel.

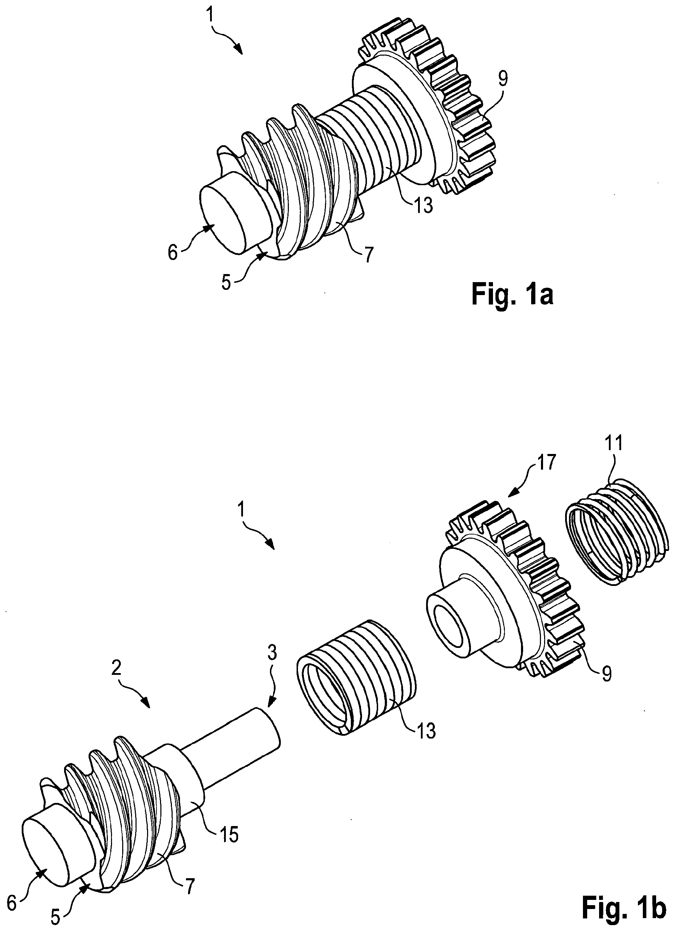

Die Figuren 1a,b zeigen eine Nachstelleinheit 1 gemäß einem bevorzugten Ausführungsbeispiel in freigestellter Form, d.h. ohne Gehäuseumgebung. Die Nachstelleinheit 1 weist eine Schneckenwelle 2 auf, welche eine erste Anschlagfläche 3 und eine zweite Anschlagfläche 5 aufweist.

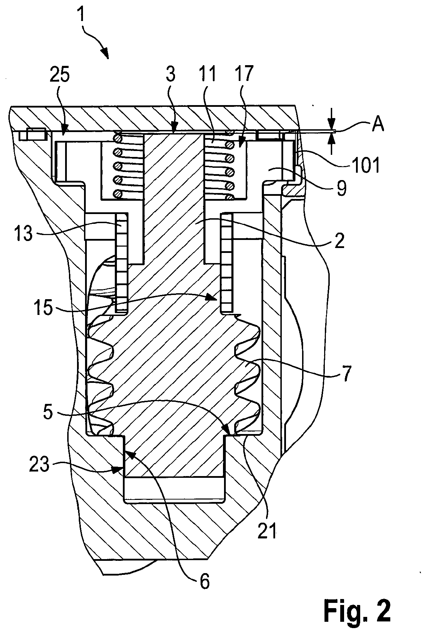

Die erste Anschlagfläche 3 ist im vorliegenden Beispiel als Wellenende ausgebildet, während die zweite Anschlagfläche 5 als Wellenabsatz ausgebildet ist. Auf der Schneckenwelle 2 ist an einem der ersten Anschlagfläche 3 gegenüberliegenden Ende ein Gleitlagerabschnitt 6 ausgebildet, der dazu eingerichtet ist, in eine korrespondierende Führungsbohrung eines Gehäuses eingesetzt zu werden (Figur 2). Die Schneckenwelle 2 weist eine Schnecke 7 auf, die gemäß der Erfindung einstückig ausgebildet an der Schneckenwelle 2 angeordnet ist.

Die Nachstelleinheit 1 weist ferner einen Freilauf 13 auf, welcher vorliegend als Schlingfeder ausgebildet ist. Der Freilauf 13 und ein Steuerritzel 9 sind auf die Schneckenwelle 2 aufsteckbar, wobei der Freilauf 13 auf einen Wellenabsatz 15 aufgeschoben wird und dazu eingerichtet ist, in einer ersten Drehrichtung eine Kraft- bzw. Drehmomentübertragung zwischen dem Steuerritzel 9 und der Schnecke 7 zu bewirken, während der Freilauf 13 in der entgegengesetzten zweiten Drehrichtung für einen Schlupf zwischen diesen beiden Bauteilen 9, 7 sorgt.

Die Nachstelleinheit 1 weist ferner eine Axialfeder 11 auf, welche in eine Ausnehmung 17 des Steuerritzels 9 aufgenommen ist. Die Axialfeder 11 ist dazu eingerichtet, den Freilauf 13 und das Steuerritzel 9 in Richtung der zweiten Anschlagfläche 5 zu drücken und so auf der Schneckenwelle 2 zu halten.

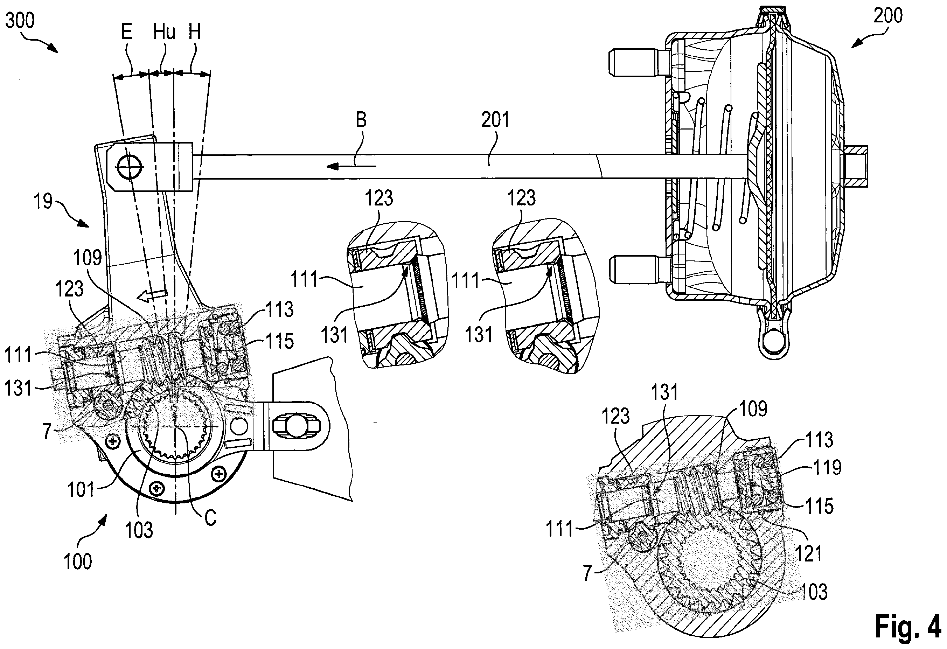

In Figur 2 ist die Nachstelleinheit 1 in Einbaulage innerhalb des Gehäuses 19 gezeigt (angedeutet durch gestrichelten Kasten). Die Schneckenwelle 2 ist mit ihrem Gleitlagerabschnitt 6 in eine korrespondierende Führungsausnehmung 23 eingesetzt. Im gezeigten Betriebszustand befindet sich die zweite Anschlagfläche 5 in Anlage an einem korrespondierenden zweiten Anschlag 21 im Gehäuse 19. Aufgrund des Wirkens der Axialfeder 11 ist die erste Anschlagfläche 3 von einem korrespondierenden ersten Anschlag 25 des Gehäuses 19 um einen Axialhub A beabstandet. Der Axialhub A definiert das Lüftspiel der Trommelbremse, wie nachfolgend unter Bezugnahme auf Figur 4 noch erläutert werden wird.

Das Steuerritzel 9 greift in eine Kontrollscheibe 101 ein. Aus Figur 2 wird deutlich, dass die Schneckenwelle 2 einen Abstand zwischen der ersten und zweiten Anschlagfläche 3,5 aufweist, der es erlaubt, dass sowohl die Schnecke 7 als auch das Steuerritzel 9 zwischen diesen beiden Anschlagsflächen liegen, so dass der Axialhub A sich aus einer Einzeltoleranz zusammensetzt. In der Praxis wird der Axialhub A vorzugsweise eine Größenordnung von einigen Zehntel Millimeter einnehmen.

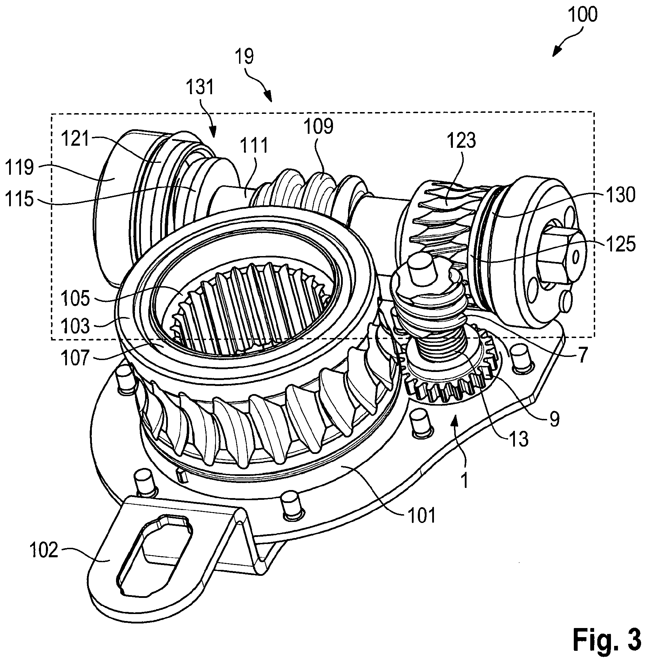

In Figur 3 ist die Nachstelleinheit 1 in ihrem strukturellen und funktionalen Zusammenwirken mit weiteren Bestandteilen eines Gestängestellers 100 gezeigt. Neben der Nachstelleinheit 1 weist der Gestängesteller 100 einen Kontrollarm 102 auf, der mit der Kontrollscheibe 101 fest verbunden ist. Der Gestängesteller 100 weist ferner ein Antriebsrad 103 auf, welches mittels eines Innenprofils 105 dazu eingerichtet ist, einen Bewegungsmechanismus zum betätigen der Bremsbeläge in einer Trommelbremse anzusteuern.

Über einen Dichtring 107 ist diese Abtriebs-Sektion gegenüber einem umliegenden Gehäuse dicht verschließbar.

Das Antriebsrad 103 befindet sich in Eingriff mit einer Antriebsschnecke 109 einer Antriebswelle 111.

Die Antriebswelle 111 ist drehbar in dem Gehäuse 19 gelagert. In der in Figur 3 links oberen Seite ist an der Antriebswelle 111 eine Druckfeder 113 (gezeigt in Figur 4) angeordnet, die gegen einen Federsitz 115 wirkend angeordnet ist und durch eine Federabdeckung 119 und einen entsprechenden Dichtring 121 abgedeckt ist.

Die Antriebswelle 111 weist ferner eine Nachstellverzahnung 123 auf, die im Eingriff mit der Schnecke 7 der Nachstelleinheit 1 steht.

Auf der in Figur 3 oben rechten Seite ist ein Lager 125 angeordnet, mittels dessen die Antriebswelle 111 drehbar in dem Gehäuse 19 aufgenommen ist.

Die grundsätzlichen Bewegungsabläufe werden unter Bezugnahme auf Figur 3 und die schematische Darstellung der Figur 4 näher erläutert.

Die Antriebswelle 111 weist eine Klauenkupplung 131 auf, welche dazu eingerichtet ist, bei Überschreiten einer vordefinierten Kraft mittels Überwindung der Druckfeder 113 eine Kraftübertragung zwischen der Nachstellverzahlung 123 und der Antriebsschnecke 109 zu unterbinden und die Klauenkupplung 131 auszukoppeln.

Wird bei einem Fahrzeug 300 eine Bremse 200 betätigt, wird die aufgebrachte Bremskraft mittels einer Pleuelstange 201 in Richtung des Pfeils B auf das Gehäuse 19 des Gestängestellers übertragen, welches sodann in eine Schwenkbewegung um die Rotationsachse C versetzt wird. Infolge des Verschwenkens des Gehäuses 19 wird das Antriebsrad 103 entgegen dem Uhrzeigersinn gedreht, weil es durch die Antriebsschnecke 109 der Antriebswelle 111 in deren Achsrichtung mitgenommen wird. Ebenso infolge der Schwenkbewegung rollt das Steuerritzel 9 auf der Kontrollscheibe 101 ab. Bei fortgesetzter Pleuelbewegung in Richtung des Pfeils B durchläuft das Gehäuse 19 zunächst einen Schwenkbereich H der für den Nennhub steht, bevor es einen Bereich H_{U} durchläuft, der für einen übermäßigen Hub infolge fortschreitenden Verschleißes der Bremsbeläge steht. Wenn die Bremsbeläge an der Trommelbremse anliegen, wird aufgrund elastischer Verformung bei fortgesetzter Bremskraftbeaufschlagung das Gehäuse 19 um einen Bereich E elastisch weiter verformt.

Zunächst tritt Schlupf zwischen dem Steuerritzel 9 und der Schnecke 7 auf, weil der Freilauf 13 bei dieser Bewegungsrichtung eine Kraftübertragung zwischen dem Steuerritzel 9 und der Schnecke 7 unterbindet. Die Bewegung des abrollenden Steuerritzels 9 wird demzufolge nicht auf die Schnecke 7 übertragen. Obwohl also zunächst bei beginnender Bremsbetätigung die Klauenkupplung 131 der Antriebswelle 111 noch in Kraftschluss befindlich ist, wird keine Rotation der Antriebswelle 111 ausgelöst. Es kann folglich bei normalen Bremsvorgängen nicht zu einer Verstellung des Lüftspiels kommen.

Wenn die Bremsbeläge in der Trommelbremse anliegen und weitere Bremskraft durch die Pleuelstange 201 in Richtung des Pfeils B übertragen wird, drückt die Antriebsschnecke 109 die Antriebswelle 111 in deren axiale Richtung aus dem eingekuppelten Zustand heraus. Nach Überwinden der Federkraft der Druckfeder 113 befindet sich die Klauenkupplung 131 dann in ausgekoppeltem Zustand.

Ist nun der Bremsvorgang beendet, und die Pleuelstange 201 bewegt sich erneut in Richtung ihrer Ursprungslage, also entgegen der Richtung des Pfeils B, wird die Klauenkupplung 131 wieder in die Kraftschlussstellung zurückbefördert. Solange dies nicht geschehen ist, kann keine Drehmomentübertragung von der Nachstellverzahnung 123 auf die Antriebsschnecke 109 erfolgen.

Wenn allerdings die Klauenkupplung 131 sich wieder in Kraftschlussstellung befindet, wird die Abrollbewegung des Steuerritzels 9 aufgrund der nun entgegensetzten Drehrichtung mittels des Freilaufs 13 auf die Schnecke 7 übertragen, wodurch wiederum ein Antrieb der Antriebswelle 111 mittels der Nachstellverzahnung 123 möglich würde.

Allerdings wird die Schneckenwelle 2 aufgrund des Axialhubs A zunächst in deren axialer Richtung ausgelenkt, bis sie unter Überwindung der Kraft der Axialfeder 11 in die dortige Endposition gebracht worden ist, in welcher die erste Anschlagfläche 3 mit dem korrespondierenden ersten Anschlag 25 des Gehäuses 19 in Anlage steht. Erst nach Überwinden dieses Axialspiels dreht sich die Antriebswelle 111, und kann die Antriebsschnecke 109 das Antriebsrad 103 auslenken. Dieser Vorgang ist der eigentliche Nachstellvorgang.

Hierdraus wird also ersichtlich, dass der Axialhub A den Betrag an Spiel hinsichtlich der Übertragung einer Drehbewegung auf das Antriebsrad 103 definiert, bei welchem mindestens eine Entspannungsbewegung der Bremsbeläge erfolgt, bevor die Nachstellung aktiv wird. Je weniger der Axialhub A im Betrieb variiert, desto zuverlässiger hält die Nachstelleinheit 1 folglich das Lüftspiel konstant.

### Bezugszeichenliste (Bestandteil der Beschreibung)

- 1: Nachstelleinheit
- 2: Schneckenwelle
- 3: erste Anschlagfläche
- 5: zweite Anschlagfläche
- 6: Gleitlagerabschnitt
- 7: Schnecke
- 9: Steuerritzel
- 11: Axialfeder
- 13: Freilauf
- 15: Wellenabsatz
- 17: Ausnehmung
- 19: Gehäuse
- 21: zweiter Anschlag
- 23: Führungsausnehmung
- 25: erster Anschlag
- 100: Gestängesteller
- 101: Kontrollscheibe
- 102: Kontrollarm
- 103: Antriebsrad
- 105: Innenprofil
- 107: Dichtring
- 109: Antriebsschnecke
- 111: Antriebswelle
- 113: Druckfeder
- 115: Federsitz
- 119: Federabdeckung
- 121: Dichtring
- 123: Nachstellverzahnung
- 125: Lager
- 131: Klauenkupplung
- 200: Bremse, insbesondere Trommelbremse
- 201: Pleuelstange
- 300: Fahrzeug

## Patentansprüche

1. Nachstelleinheit (1) für einen automatischen Gestängesteller (100) einer Bremse (200), insbesondere einer Nutzfahrzeugtrommelbremse, wobei die Nachstelleinheit aufweist:
- ein Gehäuse (19),
- eine Schneckenwelle (2), die in dem Gehäuse (19) zwischen zwei Endpositionen um einen Axialhub A verschiebbar gelagert ist,
- ein auf der Schneckenwelle angeordnetes Steuerritzel (9),
- eine auf der Schneckenwelle angeordnete Schnecke (7), und
- einen Freilauf (13), der zur Kraftübertragung zwischen dem Steuerritzel (9) und der Schnecke (7) in einer ersten Drehrichtung und zum Schlupf zwischen dem Steuerritzel (9) und der Schnecke (7) in einer entgegengesetzten zweiten Drehrichtung eingerichtet ist,
**dadurch gekennzeichnet, dass** die Schneckenwelle eine erste und eine zweite Anschlagfläche (3, 5) aufweist, welche jeweils mit einem korrespondierenden ersten Anschlag (25) und zweiten Anschlag (21) an den Endpositionen des Gehäuses (19) in Kontakt bringbar sind, wobei die Schnecke (7) einstückig mit der Schneckenwelle (2) ausgebildet ist, das Steuerritzel (9) mittels des Freilaufs (13) mit der Schneckenwelle (2) gekoppelt ist und der Axialhub A das Lüftspiel des Gestängestellers (100) definiert.

2. Nachstelleinheit (1) nach Anspruch 1,
mit einer Axialfeder (11), welche wirkend mit dem Gehäuse (19) und der Schneckenwelle (2) verbunden und dazu eingerichtet ist, die Schneckenwelle (2) in Richtung des zweiten Anschlags (21) vorzuspannen.

3. Nachstelleinheit (1) nach einem der vorstehenden Ansprüche,
wobei die erste Anschlagfläche (3) als Wellenende ausgebildet ist.

4. Nachstelleinheit (1) nach einem der vorstehenden Ansprüche,
wobei die zweite Anschlagfläche (5) als Wellenabsatz ausgebildet ist.

5. Nachstelleinheit (1) nach einem der vorstehenden Ansprüche,
wobei die Schneckenwelle (2) benachbart zu der zweiten Anschlagfläche (5) einen in dem Gehäuse (19) losgelagerten Gleitlagerabschnitt (6) aufweist.

6. Nachstelleinheit (1) nach Anspruch 5,
wobei der Gleitlagerabschnitt (6) aus einem gehärteten metallischen Werkstoff ausgebildet ist.

7. Nachstelleinheit (1) nach einem der vorstehenden Ansprüche,
wobei die Schnecke (7) und das Steuerritzel (9) in axialer Richtung zwischen der ersten und zweiten Anschlagfläche (3, 5) angeordnet sind.

8. Nachstelleinheit (1) nach einem der vorstehenden Ansprüche,
wobei der Freilauf (13) ausgebildet ist als: Schlingfeder, Rollenfreilauf, Schrägverzahnung mit Vorspannung, Sperrklinke, oder als Kombination aus den vorigen.

9. Nachstelleinheit (1) nach einem der Ansprüche 2 bis 8,
wobei die Axialfeder (11) ausgebildet ist als: Schraubenfeder, Tellerfeder, Wellenfeder, oder als Kombination aus den vorigen.

10. Nachstelleinheit (1) nach einem der vorstehenden Ansprüche,
wobei das Steuerritzel (9) auf die Schneckenwelle (2) aufgesteckt ist, und eine Ausnehmung (17) zur Aufnahme der Axialfeder (11) aufweist, vorzugsweise auf einer der ersten Anschlagfläche (3) zugewandten Seite.

11. Automatischer Gestängesteller (100) für eine Bremse, insbesondere eine Nutzfahrzeugtrommelbremse,
mit einer Nachstelleinheit (1) nach einem der vorstehenden Ansprüche.

12. Fahrzeug (300), insbesondere Nutzfahrzeug, mit
einer Anzahl von Rädern, wobei eines, mehrere oder sämtliche der Räder mittels einer Trommelbremse (200) gebremst sind, wobei einer, mehreren oder sämtlichen Trommelbremsen jeweils ein automatischer Gestängesteller (100) mit einer Nachstelleinheit (1) nach einem der Ansprüche 1 bis 10 zugeordnet ist.

## Claims

1. Adjusting unit (1) for an automatic slack adjuster (100) of a brake (200), in particular of a commercial vehicle drum brake, wherein the adjusting unit has:
- a housing (19),
- a worm shaft (2), which is mounted in the housing (19) so as to be movable between two end positions by an axial travel A,
- a control pinion (9) arranged on the worm shaft,
- a worm (7) arranged on the worm shaft, and
- a freewheel (13), which is designed for power transmission between the control pinion (9) and the worm (7) in a first direction of rotation and for slip between the control pinion (9) and the worm (7) in an opposite, second direction of rotation,
**characterized in that** the worm shaft has a first and a second stop surface (3, 5), which can each be brought into contact with a corresponding first stop (25) and second stop (21) at the end positions of the housing (19), wherein the worm (7) is formed integrally with the worm shaft (2), the control pinion (9) is coupled to the worm shaft (2) by means of the freewheel (13), and the axial travel A defines the clearance of the slack adjuster (100).

2. Adjusting unit (1) according to one Claim 1, having an axial spring (11), which is operatively connected to the housing (19) and the worm shaft (2) and is designed to preload the worm shaft (2) in the direction of the second stop (21).

3. Adjusting unit (1) according to one of the preceding claims,
wherein the first stop surface (3) is designed as a shaft end.

4. Adjusting unit (1) according to one of the preceding claims,
wherein the second stop surface (5) is designed as a shaft shoulder.

5. Adjusting unit (1) according to one of the preceding claims,
wherein the worm shaft (2) has a sliding bearing section (6) supported loosely in the housing (19) adjacent to the second stop surface (5).

6. Adjusting unit (1) according to Claim 5,
wherein the sliding bearing section (6) is formed from a hardened metallic material.

7. Adjusting unit (1) according to one of the preceding claims,
wherein the worm (7) and the control pinion (9) are arranged between the first and second stop surfaces (3, 5) in the axial direction.

8. Adjusting unit (1) according to one of the preceding claims,
wherein the freewheel (13) is designed as: a wrap spring, roller freewheel, bevel toothing with a preload, locking pawl or a combination of the above.

9. Adjusting unit (1) according to one of Claims 2 to 8,
wherein the axial spring (11) is designed as: a helical spring, diaphragm spring, wave spring or a combination of the above.

10. Adjusting unit (1) according to one of the preceding claims,
wherein the control pinion (9) is mounted on the worm shaft (2) and has a recess (17) for accommodating the axial spring (11), preferably on a side facing the first stop surface (3).

11. Automatic slack adjuster (100) for a brake, in particular a commercial vehicle drum brake,
having an adjusting unit (1) according to one of the preceding claims.

12. Vehicle (300), in particular a commercial vehicle, having
a number of wheels, wherein one, a plurality or all of the wheels are braked by means of a drum brake (200), wherein one, a plurality or all of the drum brakes is/are assigned an automatic slack adjuster (100) having an adjusting unit (1) according to one of Claims 1 to 10.

## Revendications

1. Unité de réglage (1) pour un régleur automatique de timonerie (100) d'un frein (200), en particulier d'un frein à tambour de véhicule utilitaire, l'unité de réglage présentant :
- un carter (19),
- un arbre de vis sans fin (2) monté dans le carter (19) de façon déplaçable de l'ordre d'une course axiale A entre deux positions d'extrémité,
- un pignon de commande (9) disposé sur l'arbre de vis sans fin,
- une vis sans fin (7) disposée sur l'arbre de vis sans fin, et
- une roue libre (13) qui est étudiée pour la transmission de force entre le pignon de commande (9) et la vis sans fin (7) dans un premier sens de rotation et pour le glissement entre le pignon de commande (9) et la vis sans fin (7) dans un deuxième sens de rotation contraire,
**caractérisée en ce que** l'arbre de vis sans fin présente une première et une deuxième surface de butée (3, 5), lesquelles peuvent être respectivement mises en contact avec une première butée (25) et une deuxième butée (21) correspondantes au niveau des positions d'extrémité du carter (19), la vis sans fin (7) étant réalisée d'une seule pièce avec l'arbre de vis sans fin (2), le pignon de commande (9) étant couplé au moyen de la roue libre (13) avec l'arbre de vis sans fin (2), et la course axiale A définissant le jeu d'aération du régleur de timonerie (100).

2. Unité de réglage (1) selon la revendication 1,
avec un ressort axial (11) qui est en liaison active avec le carter (19) et l'arbre de vis sans fin (2) et est étudié pour précontraindre l'arbre de vis sans fin (2) en direction de la deuxième butée (21).

3. Unité de réglage (1) selon l'une quelconque des revendications précédentes,
dans laquelle la première surface de butée (3) est réalisée en tant que bout d'arbre.

4. Unité de réglage (1) selon l'une quelconque des revendications précédentes,
dans laquelle la deuxième surface de butée (5) est réalisée en tant que talon d'arbre.

5. Unité de réglage (1) selon l'une quelconque des revendications précédentes,
dans laquelle l'arbre de vis sans fin (2) présente, au voisinage de la deuxième surface de butée (5), une partie de palier lisse (6) librement logée dans le carter (19).

6. Unité de réglage (1) selon la revendication 5,
dans laquelle la partie de palier lisse (6) est réalisée en un matériau métallique durci.

7. Unité de réglage (1) selon l'une quelconque des revendications précédentes,
dans laquelle la vis sans fin (7) et le pignon de commande (9) sont disposés en direction axiale entre la première et la deuxième surface de butée (3, 5).

8. Unité de réglage (1) selon l'une quelconque des revendications précédentes,
dans laquelle la roue libre (13) est réalisée en tant que : ressort enroulé, roue libre à rouleaux, denture hélicoïdale avec précontrainte, cliquet d'arrêt, ou en tant que combinaison de ce qui précède.

9. Unité de réglage (1) selon l'une quelconque des revendications 2 à 8,
dans laquelle le ressort axial (11) est réalisé en tant que : ressort à boudin, rondelle de Belleville, ressort sinueux, ou en tant que combinaison de ce qui précède.

10. Unité de réglage (1) selon l'une quelconque des revendications précédentes,
dans laquelle le pignon de commande (9) est monté sur l'arbre de vis sans fin (2) et présente un évidement (17) pour la réception du ressort axial (11), de préférence sur un côté tourné vers la première surface de butée (3).

11. Régleur automatique de timonerie (100) pour un frein, en particulier un frein à tambour de véhicule utilitaire,
avec une unité de réglage (1) selon l'une quelconque des revendications précédentes.

12. Véhicule (300), en particulier véhicule utilitaire, avec
un certain nombre de roues, dans lequel l'une, plusieurs, ou l'ensemble des roues sont freinées au moyen d'un frein à tambour (200), dans lequel on associe à un, plusieurs, ou l'ensemble des freins à tambour respectivement un régleur automatique de timonerie (100) avec une unité de réglage (1) selon l'une des revendications 1 à 10.
